Europäisches Patentamt

European Patent Office

Office européen des brevets

(11) Publication number: **0 055 388**
**A2**

(12) **EUROPEAN PATENT APPLICATION**

(21) Application number: **81109622.1**

(22) Date of filing: **11.11.81**

(51) Int. Cl.³: **B 29 H 17/02**

(30) Priority: **29.12.80 PC T/US80/01752**

(43) Date of publication of application:
**07.07.82 Bulletin 82/27**

(84) Designated Contracting States:
**DE FR GB IT**

(71) Applicant: **CATERPILLAR TRACTOR CO.**
**100 Northeast Adams Street**
**Peoria Illinois 61629(US)**

(72) Inventor: **Klink, Frank William**
**3871 Prospect Street**
**Mogadore Ohio 44260(US)**

(72) Inventor: **Untz, Robert William**
**212 Lakeshore Drive**
**Hanna City Illinois 61536(US)**

(74) Representative: **Wagner, Karl H., Dipl.-Ing.**
**P.O. Box 22 02 46 Gewuerzmuehlstrasse 5**
**D-8000 München 22(DE)**

(54) Method and apparatus for reducing air inclusions during tire manufacture.

(57) Entrapment of air is reduced within tire carcasses (11), of the type formed by winding elastomeric tape (12, 12A) onto a dissolvable core (13) or onto a drum, by perforating the tape (12, 12A) at the same time that it is being traveled from a supply reel (19) to the carcass (11). The perforations (47, 47A) are later eliminated during the heat curing of the carcass (11). The tape (12, 12A) may be maintained under tension to assure penetration of the perforating elements (48, 48A) and to assure that the perforations (47, 47A) remain open as the tape (12, 12A) is wrapped around the carcass (11). Tire quality is improved by reducing air inclusions and tire rejection rate during manufacture is also reduced. As the perforating operation is performed simultaneously with winding of the tape (12, 12A) on the carcass (11), delays and complications in the tire forming process are avoided.

FIG _ 2

Croydon Printing Company Ltd.

-1-

## Description

## METHOD AND APPARATUS FOR REDUCING
## AIR INCLUSIONS DURING TIRE MANUFACTURE

### Technical Field

This invention relates generally to the manufacture of vehicle tires and more particularly to a method and apparatus for reducing air entrapment between layers of elastomeric tape which are wound onto a core or a drum to form a tire.

### Background Art

Vehicle tires of the beadless type are typically manufactured by winding a continuous tape of uncured elastomeric material onto a toroidal core in an overlaping helical pattern. After several layers of the tape have been applied to the core, ply wire is wound onto the core also in a helical pattern. One or more additional layers of elastomeric tape are then applied followed by the emplacement of shoulder material and a circumferential winding of tread material. The tire body is then vulcanized or heat cured to form the elastomeric material into a unitary whole. The core is then removed with a caustic solution which is injected through the valve stem opening and which dissolves the core material without attacking the elastomer.

Methods and apparatus suitable for performing the tape and ply winding operations are described, for example, in prior U. S. Patent 3,954,538 of Charles E. Grawey, issued May 4, 1976 and in U. S. Patent 3,864,188 of Charles E. Grawey et al, issued February 4, 1975.

Beaded tires are typically formed by winding the tape onto a drum with forming of the carcass into the desired shape being performed after removal of the uncured carcass from the drum.

Process complications have been encountered in these methods of tire manufacture because of a tendency for air to be trapped between successive turns of the tape and between successive layers of the tape as it is being wound onto the core or drum. Pockets of trapped air, if not removed, will weaken the tire, shorten the effective life of the tire and contribute to a high reject rate in the manufacturing process.

Various procedures and equipment have heretofore been used to reduce air entrapment in tire bodies prepared by the above described processes. Devices similar to medical hypodermic needles have been inserted into the tire body prior to curing to withdraw entrapped pockets of air. In another procedure, a prick roller having a large number of needle like projections is applied to the tire body after winding of the tape but prior to curing to penetrate all but the innermost of the layers of tape with a large number of temporary perforations through which entrapped air may escape. The perforations are later eliminated during the heat curing process. In still another procedure, the tape stock has been temporarily unwound from the supply reel and passed over a prick roller to provide a large number of closely spaced perforations in the tape after which it is rewound on the supply reel and then the process of applying the tape to the tire core proceeds as described above.

None of the above described procedures for removing entrapped air is as effective for the purpose as would be most desirable. In instances where the tape is perforated in advance of the tire winding operations and then temporarily rewound onto the supply reel, the perforations tend to close up and seal prior to application of the tape to the core or drum. Where the tape is perforated after it has been wound onto a core, care must be taken to avoid perforation of the inner layers or tube stock and as a result there may be inadequate penetration and perforation. If perforation is performed after full completion of the winding operations, there is also a risk of damage to ply wire or belting reinforcement.

Moreover each of these known procedures complicates the manufacturing process or apparatus to a significant extent. Considerable economic savings would be realized if more efficient methods and apparatus for reducing air entrapment were available to eliminate these time consuming additional process steps.

The present invention is directed to overcoming one or more of the problems set forth above.

Disclosure of the Invention

In one aspect of the present invention, a method for forming a tire carcass includes the step of traveling elastomeric tape from a tape supply means to the tire carcass while winding the tape onto the carcass in a pattern of turns thereon, the method including the further step of forming a plurality of spaced apart perforations in the tape while the tape is being traveled from the supply means to the carcass.

In another aspect of the present invention, apparatus for winding elastomeric tape onto a tire carcass includes winding means for wrapping the tape to form turns of the tape on the carcass, supply means for delivering a supply of the tape and tape feeding means for traveling the tape from the supply means to the carcass. The apparatus is further provided with perforating means for forming spaced apart perforations in the tape as it is being traveled from the supply means to the carcass.

In still another aspect of the present invention, methods steps and means are provided for stretching the tape sufficiently to maintain the perforations open as the tape is wound onto the core.

By perforating the tape while it is in the process of traveling from a supply reel or the like to the toroidal core or drum of the tire building apparatus, air entrapment in the tire carcass is inhibited without increasing the time required to perform the overall tire building operation and without requiring complicated additional manipulations of the material or of specialized tools for this specific purpose. The perforating mechanism may, in one preferred embodiment, be an integral component of the tire building apparatus itself and may operate simultaneously with the tape applying components of the mechanism.

Brief Description of the Drawings

Figure 1 diagramatically illustrates a tire carcass building method in accordance with an embodiment of the present invention.

Figure 2 is a plan view of a portion of a tire winding apparatus.

Figure 3 is a section view taken along line III-III of Figure 2 illustrating one suitable structure for tape perforating components of the mechanism thereof.

Figure 4 is a partial section view showing a modification of the tape perforating components depicted in the previous figures.

Best Modes for Carrying Out the Invention

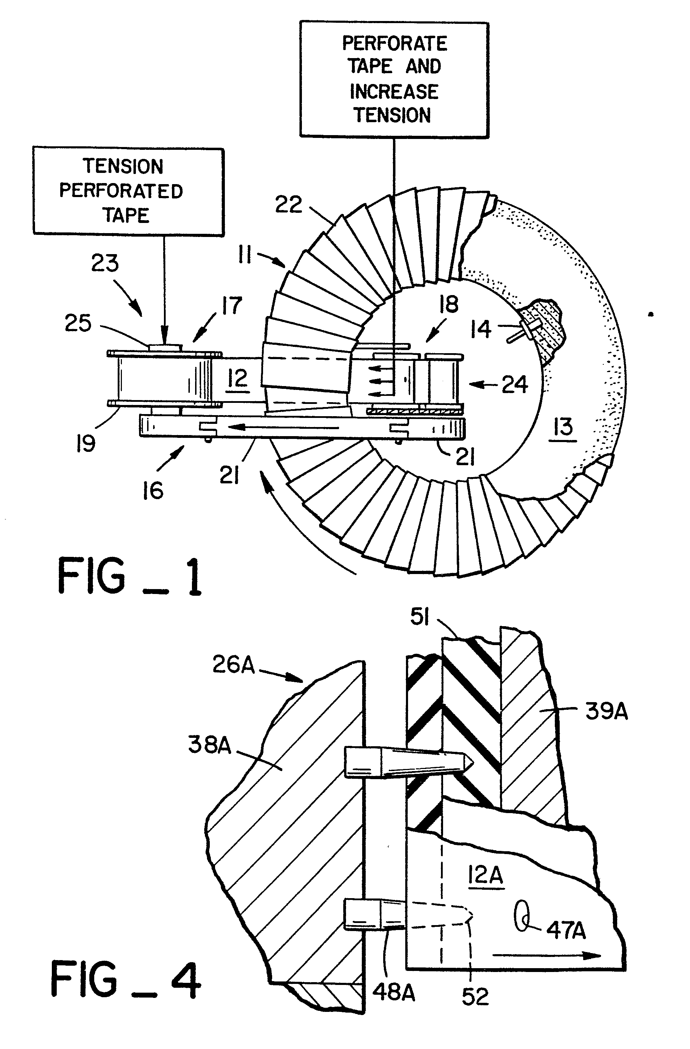

Referring initially to Figure 1 of the drawings, a tire carcass 11 of the beadless type is formed by winding elastomeric tape 12 onto a toroidal tire form core 13 in a helical pattern of overlapping turns. Several layers of tape 12 are wound on the core 13, which is typically formed of cemented sand, after which inextensible wire is similarly wound onto the core to form radial windings. Additional helically wrapped layers of tape 12 and circumferential layers of elastomeric material may then be emplaced to form tread material and sidewall material after which the tire carcass 11 is vulcanized or cured to form the component elastomeric material into a unitary whole. The core 13 is then dissolved and removed with a caustic solution which attacks the material of the core but does not attack the elastomeric material and which enters and exits through valve stem 14 openings. Suitable detailed steps for a tire building method of this kind and suitable apparatus as well are known to the art, examples being given in the hereinbefore identified prior United States patents.

The winding means 16 typically includes supply means 17 for providing and delivering a supply of the tape 12 and tape feeding means 18 for traveling the tape from the supply means to the carcass 11. Supply means 17 may be a reel 19 on which the tape 12 is initially wound and which is mounted on a rotatable shuttle ring 21 together with the tape feeding means 18. The winding operation is accomplished by encircling one side of the core 13 with ring 21, which has an openable gate segment 21', and by then rotating the ring about its axis while the core is turned more slowly about its own axis. The relative rates of rotation of ring 21 and core 13 are selected to produce a substantial degree of overlap of successive turns 22 of the tape 12 on the core 13.

In accordance with the present invention, entrapment of air between the successive turns 22 and between successive layers of turns of the tape 12 is reduced by forming spaced apart perforations in the tape as it travels from the supply means 17 to the core 13. As it is desirable that the innermost portion of a tubeless tire, commonly termed the tube stock, be free of any potential air escape route, the perforating step is preferably not initiated until at least one inner layer of the tape 12 has been wound onto the core 13 in an unperforated condition.

To facilitate the perforation operation, to hold the perforations open as the tape reaches the core 13 and to aid in forcing any air inclusions out through the open perforations as the successive turns 22 are formed, the tape 12 is maintained under tension between the supply reel 19 and the core 13. Where the perforations are formed by piercing the tape 12 without removing material as in this example, as opposed to punching out sizable openings, it is preferable that a first degree of tension be maintained in the tape 12 between the supply reel 19 and the region where the tape is being perforated and that a somewhat greater degree of tension be maintained between that region and the core 13. First tensioning means 23 for the former purpose may be a brake 25 which controllably resists turning of the supply reel 19 while the increased tension on the tape after perforation is provided for by second tensioning means 24 associated with the tape feeding means 18 as will hereinafter be described in more detail.

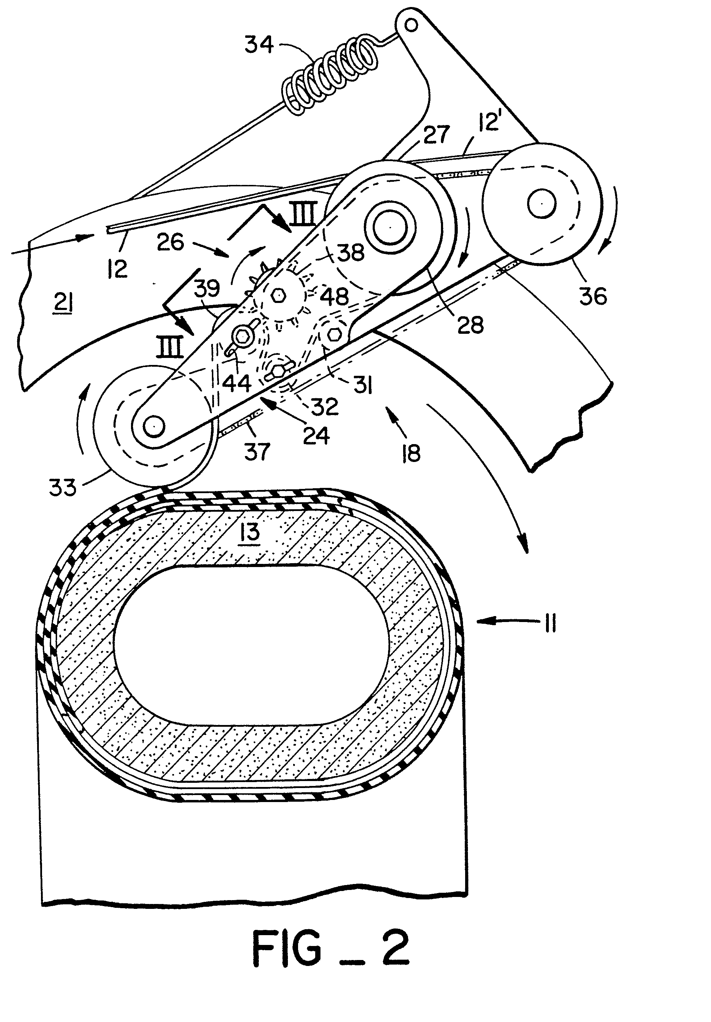

Referring now to Figure 2 the perforating means 26 for forming a plurality of spaced apart perforations in the tape 12 is preferably a built in component of the tape feeding means 18. The tape feeding means 18 includes a tape receiving roller 27 journaled between upper and lower roller carrier plates 28 and 29 respectively of the tape feeding means, the upper and lower plates being pivoted to shuttle ring 21 at the axis of roller 27 so that pivoting of the tape feeding means relative to the ring causes minimal disturbance of the tension of tape 12.

From receiving roller 27, the tape 12 passes between an idler roller 31 and a tape positioning roller 32 which feeds the tape into the perforating means 26, the rollers 31 and 32 being journaled to upper and lower carrier plates 28 and 29. Perforating means 26 feeds the tape 12 to an applicator roller 33 journaled between the carrier plates 28 and 29 in position to press the tape against the core 13 as the ring 21 is rotated. Means such as a spring 34 are connected between the lower plate 29 and ring 21 to generate a force tending to pivot the tape feeding means 18 about the axis of roller 27 to press the applicator roller 33 against the core 13 as ring 21 revolves while allowing the applicator roller to move closer to ring 21 and then further away from the ring to accommodate to the noncircular cross section of the core 13.

A paper backing strip 12' is initially present against one side of tape 12 to avoid adhesion of successive turns of the tape within the supply reel 19 shown in Figure 1. Referring again to Figure 2, paper strip 12' peels off of the tape at roller 27 and is wound onto a paper receiving spool 36 journaled between carrier plates 28 and 29.

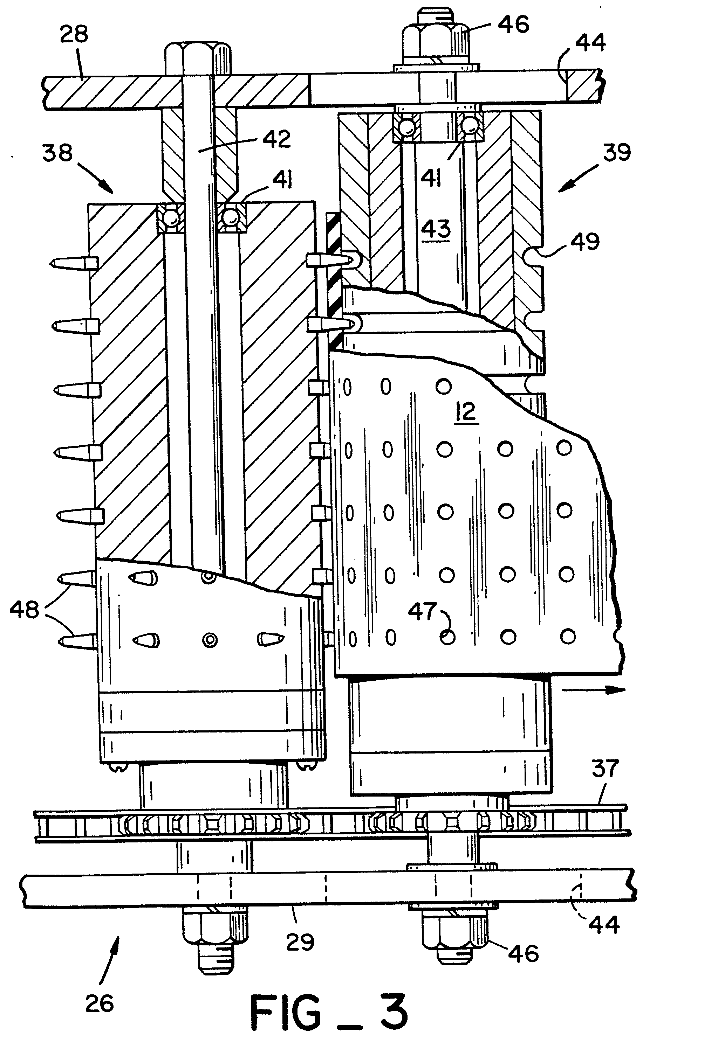

Considering now a suitable structure for the perforating means 26, reference should be made to Figure 3. In this example the tape 12 is passed between first and second parallel rollers 38 and 39 respectively which are journaled by bearings 41 for rotation about axles 42 and 43 respectively that extend between the upper and lower carrier plates 28 and 29. To enable selective adjustment of the spacing between the two rollers 38 and 39 axle 43 of the second roller 39 extends through slots 44 in the upper and lower carrier plates 28 and 29 and is held at a selected spacing from the first roller 38 by tightening nuts 46 at each end of the axle.

To produce the perforations or openings 47 in the tape 12, the first roller 38 has rows of spaced apart radially extending, pointed tape piercing elements 48 positioned to enter indentations 49 in the surface of the second roller 39 after penetration through the tape 12, the indentations 49 of the second roller being annular grooves on the roller in this particular example. Alternately, the tape piercing elements 48 may be punches or the like which remove small areas of the tape material to form perforations 47 which do not necessarily require tension in the tape to hold them open.

A drive chain 37 couples perforator rollers 38 and 39, tape receiving roller 27 and paper receiving spool 36 with applicator roller 33. Thus the rotational motion of the applicator roller 33 which is brought about by rotating the shuttle ring 21 serves to drive the other rotatable components of the tape feeding means 18 including the tape perforating means 26. The second tensioning means 24, which increases the tension on tape 12 as it passes from perforator rollers 38 and 39 to the tire carcass 11, is provided for by a difference in the diameter and drive gear pitch diameter of applicator roller 33 relative to the corresponding diameters of rollers 38 and 39. The diameters are proportioned to travel a greater length of tape 12 around roller 33 per unit time than the length which passes between rollers 38 and 39 in that time. Thus the tape 12 is stretched as it travels from the perforating means 26 to the tire carcass 11.

-10-

In another embodiment of the invention depicted in Figure 4, the second roller 39A need not have any fixed indentations but instead has an outer sleeve 51 formed of a material such as rubber or the like which is penetrable by the tips 52 of the tape piercing elements 48A.

It is also possible to achieve adequate perforation of the tape 12A if the second roller 39A has no sleeve 51 or indentations as in the case of the previously described embodiment if the rollers 38A and 39A are spaced to cause the piercing elements 38A to penetrate only partially through the tape. The stretching of the tape 12A as it leaves the perforating means 26A then pulls such partial penetrations open to form the desired full perforations 47A.

Referring again to Figure 1, the invention has been described for purposes of example as employed in the winding of beadless tire carcasses 11 on a dissolvable tire core 13. An essentially similar method and apparatus may be used to avoid air inclusions in the winding of tape onto a cylindrical drum during the manufacture of beaded tires. Further, while the described embodiments of the invention use tape 12 drawn from a supply reel 19, the supply means 17 may also be an extruder of the known type which forms the tape from bulk elastomeric material concurrently with the winding operations.

Industrial Applicability

Referring to Figure 1, the invention is applicable to tire manufacture operations in which elastomeric tape 12 is wound onto a toroidal core 13 as in the above described example or where such tape is wound onto a cylindrical drum. By repetitively perforating the tape 12 as it travels from the supply means 17 to the core 13 or drum the inclusion of air pockets between successive turns 22 and between successive layers of turns is greatly reduced as such air may escape through the perforations as the tape is pressed against the core 13 or drum and against the preceding layer of turns 22. Removal of air in this manner is aided by maintaining the tape 12 under tension as it travels from the supply means 17 to the carcass 11. Where the perforations are formed without removing material from the tape, it is preferable that the degree of tension in the tape stock be increased as it travels between the perforating region and the carcass in particular. Such tension assures that the perforations remain open to allow escape of air and also create forces which tend to expel air through the perforations. The degree of tension in the tape between the supply means 17 and the perforation region may be similar to what is customary in the art for the particular type and size of tape 12 stretching of the tape stock by about 15% being a common practice. For purposes of the present example of the invention the tape 12 is typically stretched about an additional 5% as the tape travels from the perforating region to the tire carcass 11 although such value is for purposes of illustration only and should not be considered limitative.

Referring now to Figures 2 and 3 in conjunction with Figure 1, tape 12 from supply reel 19 is drawn around receiving roller 27 as a result of the rotation of shuttle ring 21 around core 13. From receiving roller 27, the tape 12 passes between idler roller 31 and positioning roller 32 and then between the first and second rollers 38 and 39 of the perforating means 26. The tape 12 then passes under applicator roller 33 which presses or stitches the tape against the core 13 as ring 21 is revolved around the adjacent portion of the core. During this motion of ring 21, the tape feeding means 18 pivots about the axis of receiving roller 27 as necessary to accommodate to the noncircularity of the portion of the core 13 around which the tape is being wound. During passage of the tape between rollers 38 and 39, the tape piercing elements 48 of the first roller 38 penetrate the tape to produce spaced apart perforations 47. As the tape 12 is applied to the carcass 11 under tension, the perforations 47 are held open and the resilient properties of the tape create forces acting to expel air through such openings upon application of the tape to the carcass. The perforations 47 are eventually eliminated when the tire carcass 11 is vulcanized in the conventional manner.

To allow the tape 12 to be wound onto core 13 without perforations where that is desirable, most notably when the inner layer or tube stock is being wound on a tubeless tire carcass, nuts 46 as shown in Figure 3 may be loosened to allow the second roller 39 to be backed away from the first roller a sufficient distance so that elements 48 will not pierce the tape 12. Nuts 46 are then retightened to enable application of unperforated tape. For this purpose the slots 44 which provide for backing off of the second roller 39 relative to the first roller 38 are aligned in a direction which minimizes disturbance of tape tension in connection with such movement of the second roller.

The degree of tension in the tape 12 as it is traveling between supply reel 19 of Figure 1 and the tape feeding means 18 may be fixed by first tensioning means 23 for applying a controlled braking force to the supply reel 19 in the conventional manner. Referring to Figure 2, the desirable increased degree of tension in the portion of the tape 12 which is traveling from the perforating means 26 to the carcass 11 is established by the hereinbefore described greater rate of travel of the tape around applicator roller 33 relative to the rate of travel between rollers 38 and 39. The clamping action exerted on the tape 12 within the perforating means 26 enables the two different degrees of tension to be established in the two different portions of the tape.

Operation of the modification of the invention depicted in Figure 4 is essentially similar to that of the previously described embodiment except insofar as permanent indentations are not required in the second roller 39A for the purpose of receiving the tape piercing elements 48A. In the embodiment of Figure 4 the tips 52 of the tape piercing elements 48A temporarily penetrate into the resilient outer sleeve 51 of the second roller 39A and the resultant openings in sleeve 51 reclose after withdrawal of the elements 48A.

Other aspects, objects and advantages of this invention can be obtained from the study of the drawings, the disclosure and the appended claims.

-14-

Claims

1.    In a method for forming a tire carcass (11) which includes the steps of traveling an elastomeric tape (12) from a tape supply means (17) to the tire carcass (11) while winding said tape (12) onto said carcass (11) in a pattern of turns (22) thereon, the improvement comprising: forming a plurality of spaced apart perforations (47) in said tape (12) as said tape (12) is being traveled from said supply means (17) to said tire carcass (11).

2.    The method set forth in claim 1 wherein said step of forming a plurality of spaced apart perforations (47) in said tape (12) is initiated after at least one inner layer of said tape (12) has been wound onto said carcass (11) in an unperforated condition.

3.    The method set forth in claim 1 including the further step of maintaining said elastomeric tape (12) under tension while winding said tape (12) onto said carcass (11), said tension being of a degree sufficient to hold said perforations (47) open as said tape (12) is applied to said carcass (11).

4.    The method set forth in claim 3 wherein said forming of perforations (47) in said tape (12) is performed on said tape (12) at an intermediate point in the travel of said tape (12) from said supply means (17) to said tire carcass (11) and including the further steps of maintaining a first degree of tension in said tape (12) between said supply means (17) and said intermediate point and maintaining an increased degree of tension in said tape (12) between said intermediate point and said tire carcass (11).

5. In apparatus for winding elastomeric tape (12, 12A) onto a tire carcass (11), said apparatus having winding means (16) for wrapping said tape (12, 12A) on said carcass (11) to form turns (22) of said tape (12, 12A) thereon, supply means (17) for delivering a supply of said tape (12, 12A), and tape feeding means (18) for traveling said tape (12, 12A) from said supply means (17) to said carcass (11), the improvement comprising:
perforating means (26, 26A) for forming spaced apart perforations (47, 47A) in said tape (12, 12A) as said tape (12, 12A) is being traveled from said supply means (17) to said carcass (11).

6. The apparatus set forth in claim 5 further including means (44, 46) for retracting said perforating means (26, 26A) from said tape (12, 12A) to enable winding of unperforated lengths of said tape (12, 12A) onto said carcass (11).

7. The apparatus set forth in claim 5 further including first tensioning means (23) for maintaining said tape (12, 12A) in a stretched condition as said tape (12, 12A) travels through said perforating means (26, 26A).

-16-

8. The apparatus set forth in claim 7 further including additional tensioning means (24) for increasing the tension in said tape (12, 12A) between said perforating means (26, 26A) and said carcass (11) to maintain said perforations (47, 47A) open as said tape (12, 12A) is wound onto said carcass (11).

9. The apparatus set forth in claim 5 wherein said perforating means (26, 26A) includes a first roller (38, 38A) having a plurality of spaced apart tape piercing elements (48, 48A) extending outwardly therefrom, and wherein said tape feeding means (18) travels said tape (12, 12A) against said tape piercing elements (48, 48A) during passage of said tape (12, 12A) from said supply means (17) to said carcass (11).

10. The apparatus set forth in claim 9 further including a second roller (39, 39A) disposed in parallel relationship to said first roller (38, 38A) and wherein said tape feeding means (18) travels said tape (12, 12A) between said first (38, 38A) and second (39, 39A) rollers.

11. The apparatus set forth in claim 10 wherein said tape piercing elements (48) extend from said first roller (38) a distance greater than the thickness of said tape (12) and wherein said second roller (39) has a plurality of indentations (49) positioned to receive the tips (52) of said tape piercing elements (48).

0055388

-17-

12.   The apparatus set forth in claim 10 wherein said tape piercing elements (48A) extend from said first roller (38A) a distance greater than the thickness of said tape (12, 12A), and wherein said second roller (39A) has an outer sleeve (51) formed of material which is penetratable by said tape piercing elements (48A).

PERFORATE
TAPE AND
INCREASE
TENSION

TENSION
PERFORATED
TAPE

FIG _ 1

FIG _ 4

FIG _ 2

**FIG _ 3**